Europäisches Patentamt

European Patent Office

Office européen des brevets

(19)

(11) **EP 1 503 522 A1**

(12) **EUROPEAN PATENT APPLICATION**
published in accordance with Art. 158(3) EPC

(43) Date of publication:
**02.02.2005 Bulletin 2005/05**

(51) Int Cl.⁷: **H04B 7/26**

(21) Application number: **03792683.9**

(86) International application number:
**PCT/JP2003/010334**

(22) Date of filing: **14.08.2003**

(87) International publication number:
**WO 2004/019517 (04.03.2004 Gazette 2004/10)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **20.08.2002 JP 2002239749**

(71) Applicant: **MATSUSHITA ELECTRIC INDUSTRIAL CO., LTD.**
**Kadoma-shi, Osaka 571-8501 (JP)**

(72) Inventor: **NISHIO, Akihiko**
**Yokosuka-shi, Kanagawa 239-0846 (JP)**

(74) Representative: **Grünecker, Kinkeldey, Stockmair & Schwanhäusser Anwaltssozietät Maximilianstrasse 58 80538 München (DE)**

(54) **OUTER LOOP TRANSMISSION POWER CONTROL METHOD AND RADIO COMMUNICATION DEVICE**

(57)    In a wireless communication system in which A-DPCH (Associated - Dedicated Physical CHannel) and HS-DPCCH (High Speed - Dedicated Physical Control CHannel) exist, for the purpose of performing an appropriate outer loop transmission power control for HS-DPCCH even during an A-DPCH DTX (Discontinuous Transmission) period, transmission data monitoring section 12 monitors whether a bit sequence transmitted via A-DPCH is present or not, and dummy data generation section 14 generates a random sequence used for outer loop transmission power control of HS-DPCCH during a DTX period in which a bit sequence is absent, and coding section 16 performs CRC coding on the generated random sequence, and transmission radio section 22 then transmits the CRC-coded random sequence via A-DPCH.

FIG. 1

**Description**

FIELD OF THE INVENTION

The present invention relates to an outer loop transmission power control method and a wireless communication apparatus.

BACKGROUND ART

In the field of wireless communication systems, HSDPA (High Speed Downlink Packet Access) has been proposed, which allows a plurality of communication terminals to share a high-rate and large-capacity downlink channel to perform high-rate packet transmission via the downlink channel. In addition, these days, a technique for speeding up the packet transmission rate on an uplink channel has been under study (such a technique is referred to as Fast-UL (Fast - Uplink) herein). In HSDPA, a plurality of channels is used, including HS-PDSCH (High Speed - Physical Downlink Shared CHannel), A-DPCH (Associated - Dedicated Physical CHannel), HS-DPCCH (High Speed Dedicated Physical Control CHannel), etc. Likewise, Fast-UL is expected to involve a plurality of channels such as HS-PUSCH (High Speed - Physical Uplink Shared CHannel), A-DPCH, HS-DPCCH, and so on.

HS-PDSCH is a downlink shared channel used for packet transmission. HS-PUSCH is an uplink shared channel used for packet transmission. Accompanying a shared channel, A-DPCH, which is a dedicated associated channel on uplink and downlink, transports pilot signals, TPC (Transmission Power Control) commands, control signals for keeping a communication link, etc. HS-DPCCH is a dedicated control channel in uplink and downlink, over which signals for controlling a shared channel such an ACK signal or a NACK signal, and a CQI (Channel Quality Indicator) signal, etc. are transmitted. Incidentally, an ACK signal is a signal indicating that a high-rate packet which had been transmitted from a base station or from a communication terminal was correctly demodulated at a communication terminal or at a base station, whereas a NACK signal is a signal indicating that a high-rate packet which had been transmitted from a base station or from a communication terminal was erroneously demodulated at a communication terminal or at a base station. Additionally, CQI is a signal which is generated based on channel quality, indicating a combination of, for example, a packet modulation scheme, a block size, a transmission power adjustment value, and so forth. In HSDPA, a communication terminal notifies its communicating party about a packet modulation scheme, a block size, a transmission power adjustment value, etc., as desired by the communication terminal, by using such a CQI. Although CQI is a signal which is generated based on channel quality also under Fast-UL, its specific contents have not been fixed yet.

Incidentally, in Fast-UL, channels are provided on both uplink and downlink for both A-DPCH and HS-DPCCH, where CQI is transmitted via an uplink HS-DPCCH whereas an ACK/NACK signal is transmitted via a downlink HS-DPCCH. In contrast, according to HSDPA, though channels are provided on both uplink and downlink for A-DPCH, an uplink channel only is provided for HS-DPCCH, where CQI and an ACK/NACK signal is transmitted on an uplink HS-DPCCH. Soft handover (SHO) is employed in A-DPCH. In contrast, HS-PDSCH, HS-PUSCH, and HS-DPCCH are subjected to hard handover (HHO), which means that HS-PDSCH, HS-PUSCH, and HS-DPCCH are always connected to a single base station only. Moreover, the timing for executing HHO on HS-PDSCH and HS-PUSCH is the same as the HHO timing of HS-DPCCH.

An outer loop transmission power control is often used for transmission power control in HSDPA and Fast-UL. In an outer loop transmission power control, a target SIR is raised or lowered in accordance with reception quality so as to keep the reception quality in a desired quality. Then, based on the result of a comparison between the target SIR and the reception SIR, a TPC command is generated. As reception quality, BLER (Block Error Rate) is taken, which is based on the result (CRC result) of error detection according to CRC (Cyclic Redundancy Check). If CRC = OK, the target SIR is decremented by Dec, while it is incremented by Inc if CRC = NG. Assuming a target BLER as BLER_T, the relation between Dec and Inc is expressed with the following equation: where Inc > 0

$$\text{Inc x BLER\_T = Dec x (1 - BLER\_T)} \qquad (1)$$

In HSDPA and Fast-UL, the outer loop transmission power control of HS-DPCCH is performed using a CRC result of A-DPCH. Here, considering a case where DTX (Discontinuous Transmission) is applied to A-DPCH, where DTX is a discontinuous mode for suspending transmission during absence of a bit sequence to be transmitted, it is impossible to set a target SIR into an appropriate value for outer loop transmission power control of HS-DPCCH because a CRC result is not available on A-DPCH during DTX. Consequently, a problem arises in that transmission power for HS-DPCCH may become excessive or insufficient during DTX of A-DPCH, thereby making it impossible to perform outer loop transmission power control of HS-DPCCH appropriately.

DISCLOSURE OF THE INVENTION

It is an object of the present invention to provide an outer loop transmission power control method and a wireless communication apparatus which makes it possible to perform outer loop transmission power control for HS-DPCCH in an appropriate manner even during DTX of A-DPCH, which is achieved in a wireless communication system operating in a mixed channel environment involving A-DPCH and HS-DPCCH.

In order to solve the above problem and to achieve the object, under a wireless communication system where a CRC-coded A-DPCH and a non-CRC-coded HS-DPCCH exist, the present invention is devised as characterized in that outer loop transmission power control for HS-DPCCH is performed based on the error detection result of a bit sequence during a period of the presence of a bit sequence to be transmitted via A-DPCH (i.e. a period during non-DTX of A-DPCH), whereas outer loop transmission power control for HS-DPCCH is performed based on the error detection result of a random sequence, which is transmitted via A-DPCH as an alternative to a bit sequence, during a period of the absence of a bit sequence to be transmitted via A-DPCH (i.e. a period during DTX of A-DPCH).

With this feature, it is possible to perform outer loop transmission power control for HS-DPCCH suitably even during DTX of A-DPCH in a wireless communication system where A-DPCH and HS-DPCCH are concurrently in service.

BRIEF DESCRIPTION OF THE DRAWINGS

FIG. 1 is a block diagram illustrating the configuration of a wireless communication apparatus according to an embodiment of the present invention;
FIG. 2 is a diagram illustrating the transmission pattern of dummy data according to an embodiment of the present invention;
FIG. 3 is a diagram for illustration of uplink transmission power control for HS-DPCCH according to an embodiment of the present invention; and
FIG. 4 is a diagram for illustration of downlink transmission power control for HS-DPCCH according to an embodiment of the present invention.

BEST MODE FOR CARRYING OUT THE INVENTION

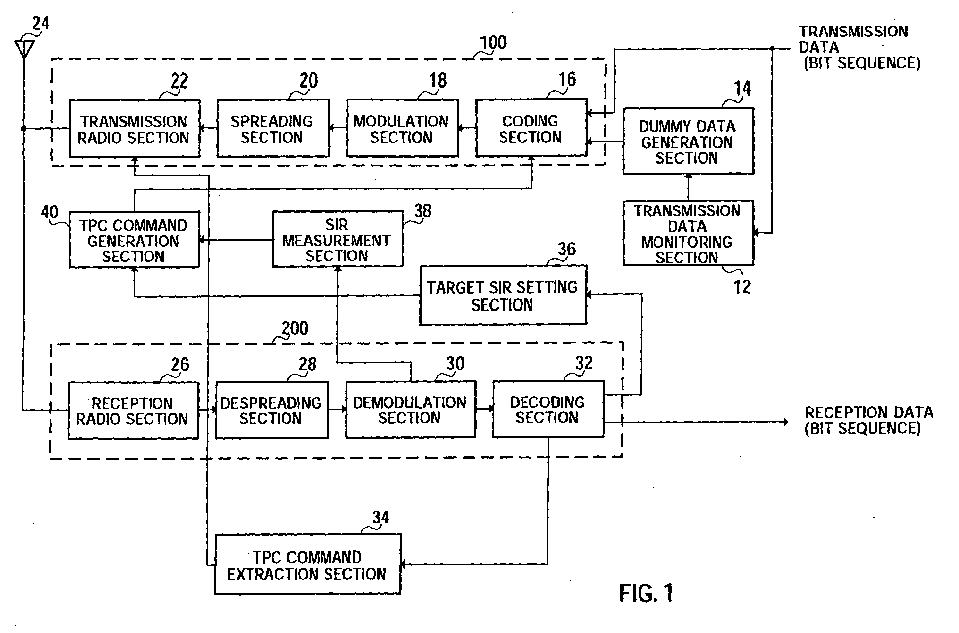

An embodiment of the present invention will be described below. FIG. 1 is a block diagram illustrating the configuration of a wireless communication apparatus according to an embodiment of the present invention. A wireless communication apparatus here is installed in a communication terminal apparatus or a base station apparatus under a mobile communication system in which A-DPCH is CRC-coded but HS-DPCCH is not CRC-coded. In addition, according to this mobile communication system, DTX is done on A-DPCH while DTX is not done on HS-DPCCH. Furthermore, this wireless communication apparatus is intended to be used in a mobile communication system where Fast-UL and/or HSDPA is performed.

Transmission data monitoring section 12 monitors whether there is transmission data (bit sequence) on A-DPCH or not. Then, if there is a continuance of a state where no data to be transmitted exists for a predetermined length of period, transmission data monitoring section 12 instructs dummy data generation section 14 to generate dummy data, which is a random sequence. In accordance with this instruction, dummy data generation section 14 generates dummy data, and inputs it to coding section 16. That is, dummy data generation section 14 generates dummy data in place of transmission data during a period in which no data to be transmitted via A-DPCH exists (a DTX period). This dummy data is used at another wireless communication apparatus of its communicating party at the other end for outer loop transmission power control of HS-DPCCH. Meanwhile, during a period in which there is some transmission data of A-DPCH, the transmission data of A-DPCH is inputted into coding section 16. In addition, HS-DPCCH transmission data is inputted into coding section 16.

Transmission section 100 comprises coding section 16, modulation section 18, spreading section 20, and transmission radio section 22.

Coding section 16 performs convolution coding and CRC coding on transmission data and dummy data of A-DPCH to configure a transmission frame, which is made up of a plurality of time slots. Coding section 16 further performs convolution coding on transmission data of HS-DPCCH to configure a transmission frame, which is also made up of a plurality of time slots. That is, though A-DPCH is CRC-coded, HS-DPCCH is not subjected CRC coding. It is noted that a different coding method other than CRC coding may be used as an alternative error detection coding. When configuring a transmission frame, coding section 16 embeds a TPC command for A-DPCH in an A-DPCH time slot, and embeds a TPC command for HS-DPCCH in an HS-DPCCH time slot. These TPC commands are inputted from TPC command generation section 40.

Modulation section 18 performs modulation processing such as QPSK on the transmission data and the dummy data. Spreading section 20 performs spreading processing on the modulated transmission signals and the modulated dummy signals with a spreading code which is individually assigned to each channel.

After performing processing such as D/A conversion, transmission power control, up conversion, etc., on the spread transmission signals and the spread dummy signals, transmission radio section 22 transmits the signals via antenna 24. Transmission radio section 22 transmits A-DPCH transmission signals and A-DPCH dummy signals over A-DPCH, and transmits HS-DPCCH transmission signals over HS-DPCCH. Moreover, transmission radio section 22 controls A-DPCH transmission power in accordance with an A-DPCH TPC command, and controls HS-DPCCH transmission power in accordance with an HS-DPCCH TPC command. These TPC commands are inputted from TPC command extraction section 34.

Reception section 200 comprises reception radio section 26, despreading section 28, demodulation section 30, and decoding section 32.

Reception radio section 26 performs processing such as down conversion, AGC (Automatic Gain Control), A/D conversion, etc., on signals received through antenna 24. Having the same configuration as one shown in FIG. 1, the wireless communication apparatus of its communicating party transmits dummy signals instead of transmission signals via A-DPCH during an A-DPCH DTX period. Accordingly, reception radio section 26 receives dummy signals via A-DPCH during an A-DPCH DTX period. Meanwhile, during a period other than DTX, A-DPCH reception signals are inputted into reception radio section 26. In addition, HS-DPCCH reception signals are inputted into reception radio section 26.

Despreading section 28 performs despreading processing on the reception signals and the dummy signals with a spreading code which is individually assigned to each channel. Demodulation section 30 demodulates the despread reception signals and the despread dummy signals, which are QPSK signals and the like. The demodulated signals are inputted into decoding section 32 and SIR measurement section 38.

Decoding section 32 performs error correction decoding and error detection in accordance with CRC judgment on the A-DPCH reception signals and the A-DPCH dummy signals. Additionally, decoding section 32 performs error correction decoding only on the HS-DPCCH reception signals. Such decoding produces A-DPCH reception data (bit sequence) or A-DPCH dummy data (random sequence), together with HS-DPCCH reception data (bit sequence). The reception data is inputted into TPC command extraction section 34. In addition, an A-DPCH CRC result, that is, CRC = OK (indicating no error) or CRC = NG (indicating error), is inputted in target SIR setting section 36. The CRC result of the dummy data is inputted during an A-DPCH DTX period, whereas the CRC result of the reception data is inputted during an A-DPCH non-DTX period.

TPC command extraction section 34 extracts a TPC command which is accommodated in a time slot of the reception data. TPC command extraction section 34 extracts an A-DPCH TPC command from the A-DPCH reception data, and extracts an HS-DPCCH TPC command from the HS-DPCCH reception data. The extracted TPC command is inputted into transmission radio section 22.

Based on the CRC result of A-DPCH, target SIR setting section 36 makes the settings of an A-DPCH target SIR and an HS-DPCCH target SIR. Specifically, if CRC = OK, the target SIR is decremented by Dec, while it is incremented by Inc if CRC = NG. Here, the relation between Dec and Inc is as specified in the above equation (1). Based on the CRC result of the dummy data during an A-DPCH DTX period or on the CRC result of the reception data during an A-DPCH non-DTX period, target SIR setting section 36 makes the settings of an A-DPCH target SIR and an HS-DPCCH target SIR. Both of the set target SIRs are inputted into TPC command generation section 40.

SIR measurement section 38 measures the SIR of a symbol of pilot sequence among the reception signals. For A-DPCH, SIR measurement section 38 measures the SIR of the reception signals during a non-DTX period, and measures the SIR of the dummy signals during a DTX period. In addition, for HS-DPCCH, SIR measurement section 38 measures the SIR of the reception signals. Each of the measured SIRs is inputted into TPC command generation section 40.

Comparing the A-DPCH reception SIR with the A-DPCH target SIR, TPC command generation section 40 generates a TPC command for A-DPCH based on the result of the comparison. Also comparing the HS-DPCCH reception SIR with the HS-DPCCH target SIR, TPC command generation section 40 generates a TPC command for HS-DPCCH based on the result of the comparison.

That is, during an A-DPCH DTX period, for HS-DPCCH, a comparison is made between the HS-DPCCH target SIR, which is set in accordance with the CRC result of the A-DPCH dummy data, and the HS-DPCCH reception SIR, while the A-DPCH target SIR set in accordance with the CRC result of the A-DPCH dummy data is compared with the A-DPCH reception SIR for A-DPCH.

On the other hand, during an A-DPCH non-DTX period, for HS-DPCCH, a comparison is made between the HS-DPCCH target SIR, which is set in accordance with the CRC result of the A-DPCH reception data, and the HS-DPCCH reception SIR, while the A-DPCH target SIR set in accordance with the CRC result of the A-DPCH reception data is compared with the A-DPCH reception SIR for A-DPCH.

Incidentally, if the measured SIR equals to or exceeds the target SIR, a TPC command instructing the decrease in transmission power (Down) is generated; a TPC command instructing the increase in transmission power (Up) is generated if the measured SIR is less than the target SIR. The generated TPC commands are inputted into coding section 16 respectively.

Note that, if a wireless communication apparatus having the above configuration is accommodated in a base station apparatus, the base station apparatus performs parallel processing for all of communication terminal apparatuses under communication with the base station apparatus. Furthermore, in a case where outer loop transmission power control is conducted in a base station apparatus, it is a common implementation that the above target SIR setting section is located at an upper control station apparatus over the base station apparatus, allowing a target SIR which is set at the control station apparatus to be notified to the base station apparatus.

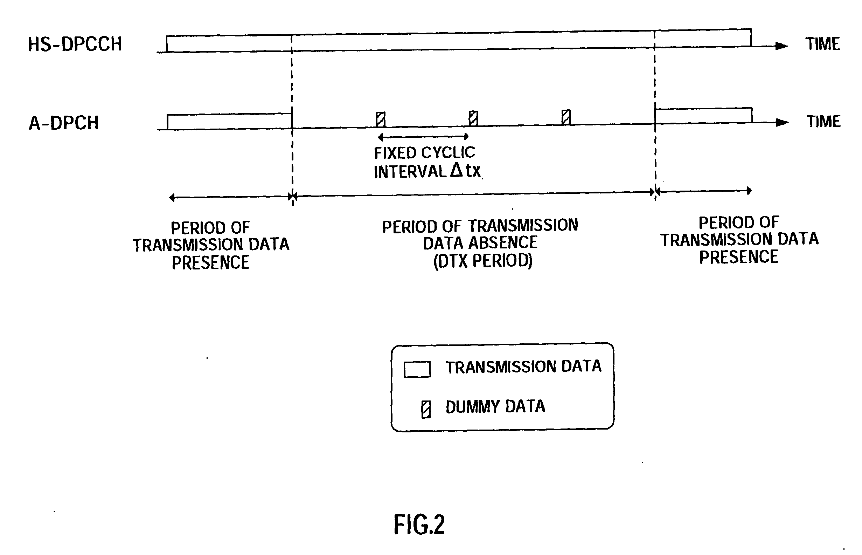

FIG. 2 illustrates how dummy data is transmitted. As shown in FIG. 2, during a time interval in which transmission data is absent (i.e. a DTX period), dummy data is transmitted on A-DPCH instead of transmission data with a fixed cycle of $\Delta t_x$. Because DTX is not adopted in HS-DPCCH, transmission data is present even during an A-DPCH DTX period. The outer loop transmission power control of HS-DPCCH is performed using a CRC result of A-DPCH. That is, the target SIR of HS-DPCCH is set in accordance with the CRC result of A-DPCH transmission data during a non-DTX period, whereas it is set in accordance with the CRC result of A-DPCH dummy data during a DTX period.

Next, taking an example of Fast-UL, an explanation is given on the outer loop transmission power control of HS-DPCCH during A-DPCH DTX period. Here, an explanation on transmission power control of A-DPCH is omitted because the same technique as in a prior art applies.

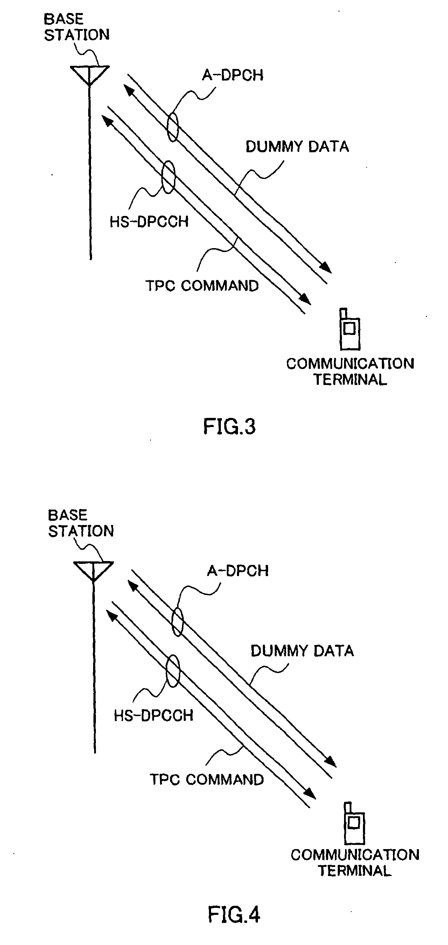

First, outer loop transmission power control of uplink HS-DPCCH is explained with reference to FIG. 3. During DTX period of an uplink A-DPCH, dummy data is transmitted from a communication terminal to a base station via uplink A-DPCH. At the base station or at a control station which is not shown in the figure, the target SIR of HS-DPCCH is set in accordance with the CRC result of the dummy data. Then, the base station generates a TPC command for an uplink HS-DPCCH according to the comparison of the target SIR and a reception SIR of an uplink HS-DPCCH, and transmits the generated TPC command to the communication terminal via a downlink HS-DPCCH. In accordance with the TPC command, the communication terminal controls the transmission power of the uplink HS-DPCCH.

Next, outer loop transmission power control of downlink HS-DPCCH is explained with reference to FIG. 4. During DTX period of a downlink A-DPCH, dummy data is transmitted from a base station to a communication terminal via downlink A-DPCH. At the communication terminal, the target SIR of HS-DPCCH is set in accordance with the CRC result of the dummy data. Then, the communication terminal generates a TPC command for a downlink HS-DPCCH according to the comparison of the target SIR and a reception SIR of a downlink HS-DPCCH, and transmits the generated TPC command to the base station via an uplink HS-DPCCH. In accordance with the TPC command, the base station controls the transmission power of the downlink HS-DPCCH.

Note that the present embodiment is also applicable even when A-DPCH provides connection to a plurality of base stations, that is, in a case where A-DPCH is under SHO conditions, though descriptions in FIG. 3 and FIG. 4 assume that a connection is made with a single base station on A-DPCH. Notwithstanding the explanation made here with the example of Fast-UL in FIGs. 3 and 4, the present embodiment is not limited to such a case; the embodiment is applicable to all wireless communication systems where an A-DPCH which is subjected to CRC-coding and an HS-DPCCH which is not subjected to CRC-coding are established in a existent manner.

Thus, according to the present embodiment, even when transmission data is absent on A-DPCH, CRC-coded dummy data is transmitted over A-DPCH with a fixed cycle; this makes it possible to control a target SIR of HS-DPCCH into an appropriate value based on a CRC result of A-DPCH even when transmission data is absent on A-DPCH.

As described above, according to the present invention, it is possible to perform outer loop transmission power control for HS-DPCCH suitably even during DTX period of A-DPCH in a wireless communication system where A-DPCH and HS-DPCCH are used in parallel.

This specification is based on the Japanese Patent Application No. 2002-239749 filed on August 20, 2002, entire content of which is expressly incorporated by reference herein.

INDUSTRIAL APPLICABILITY

The present invention is applicable to a wireless communication terminal apparatus or a wireless communication base station apparatus used in a mobile communication system.

**Claims**

1. An outer loop transmission power control method used in a wireless communication system in which a first dedicated channel that is subjected to error detection coding and a second dedicated channel that is not subjected to error detection coding exist, the method setting a target SIR for outer loop transmission power control of said second dedicated channel in accordance with an error detection result of a bit sequence transmitted via said first dedicated channel during a period other than a DTX period of said first dedicated channel, while setting the target SIR for outer loop transmission power control of said second dedicated channel in accordance with an error detection result of a random sequence transmitted in place of the bit sequence via said first dedicated channel during the DTX period of said first dedicated channel.

2. A wireless communication apparatus used in a wireless communication system in which a first dedicated channel that is subjected to error detection coding and a second dedicated channel that is not subjected to error detection coding exist, the apparatus comprising:

a monitoring section that monitors whether a bit sequence transmitted via said first dedicated channel is present or not;

a generating section that generates a random sequence used for outer loop transmission power control of said second dedicated channel during a DTX period in which a bit sequence transmitted via said first dedicated channel is not present;

a coding section that performs error detection coding on the generated random sequence; and

a transmitting section that transmits the random sequence subjected to error detection coding via said first dedicated channel.

3. A wireless communication apparatus used in a wireless communication system in which a first dedicated channel that is subjected to error detection coding and a second dedicated channel that is not subjected to error detection coding exist, the apparatus comprising:

a receiving section that receives via said first dedicated channel a random sequence used for outer loop transmission power control of said second dedicated channel during a DTX period of said first dedicated channel;

a measuring section that measures a reception SIR of said second dedicated channel;

a generating section that generates a TPC command for said second dedicated channel in accordance with a result of a comparison between the measured SIR and a target SIR set in accordance with an error detection result of the random sequence; and

a transmitting section that transmits the generated TPC command via said second dedicated channel.

FIG. 1

EP 1 503 522 A1

HS-DPCCH ——————————————————————→ TIME

A-DPCH ——————————————→ TIME

FIXED CYCLIC
INTERVAL Δtx

PERIOD OF
TRANSMISSION DATA
PRESENCE

PERIOD OF TRANSMISSION
DATA ABSENCE
(DTX PERIOD)

PERIOD OF
TRANSMISSION DATA
PRESENCE

☐ TRANSMISSION DATA

▨ DUMMY DATA

FIG.2

EP 1 503 522 A1

BASE
STATION

A-DPCH

DUMMY DATA

HS-DPCCH

TPC COMMAND

COMMUNICATION
TERMINAL

FIG.3

BASE
STATION

A-DPCH

DUMMY DATA

HS-DPCCH

TPC COMMAND

COMMUNICATION
TERMINAL

FIG.4

## INTERNATIONAL SEARCH REPORT

| | International application No. |
|---|---|
| | PCT/JP03/10334 |

**A. CLASSIFICATION OF SUBJECT MATTER**
   Int.Cl$^7$  H04B7/26

According to International Patent Classification (IPC) or to both national classification and IPC

**B. FIELDS SEARCHED**

Minimum documentation searched (classification system followed by classification symbols)
   Int.Cl$^7$  H04B7/26

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-252917 A (KDD Kabushiki Kaisha), 14 September, 2000 (14.09.00), Page 16 (Family: none) | 1-3 |
| A | WO 00/74289 A1 (SAMSUNG ELECTRONICS CO., LTD.), 07 December, 2000 (07.12.00), Abstract & CA 2337909 A  & AU 5110600 A & EP 1101311 A | 1-3 |
| A | EP 1089456 A2 (Nortel Networks Ltd.), 04 April, 2001 (04.04.01), Abstract; page 3 & CA 2321382 A1 | 1-3 |

☐ Further documents are listed in the continuation of Box C.   ☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier document but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 18 November, 2003 (18.11.03) | 09 December, 2003 (09.12.03) |

| Name and mailing address of the ISA/ | Authorized officer |
|---|---|
| Japanese Patent Office | |
| Facsimile No. | Telephone No. |

Form PCT/ISA/210 (second sheet) (July 1998)